# EUROPEAN PATENT SPECIFICATION

(11) **EP 3 147 802 B1**
(45) Date of publication and mention of the grant of the patent: **06.01.2021**
(21) Application number: 16189898.6
(22) Date of filing: 21.09.2016
(51) Int. Cl.: G06F 16/44

(54) **METHOD AND APPARATUS FOR PROCESSING INFORMATION**
VERFAHREN UND VORRICHTUNG ZUR VERARBEITUNG VON INFORMATIONEN
PROCÉDÉ ET APPAREIL DE TRAITEMENT D'INFORMATIONS

(30) Priority: 28.09.2015 CN 201510627227
(43) Date of publication of application: 29.03.2017
(73) Proprietor: Xiaomi Inc., Beijing 100085 (CN)
(72) Inventor: WANG, Qian, Beijing, 100085 (CN); YANG, Jingsong, Beijing, 100085 (CN)
(74) Representative: Hughes, Andrea Michelle

(56) References cited:
- EP-A1- 2 608 167
- EP-A1- 2 840 488
- US-A1- 2010 281 042
- VELIBOR ADZIC ET AL: "A survey of multimedia content adaptation for mobile devices", MULTIMEDIA TOOLS AND APPLICATIONS, KLUWER ACADEMIC PUBLISHERS, BO, vol. 51, no. 1, 9 December 2010 (2010-12-09), pages 379-396, XP019872502, ISSN: 1573-7721, DOI: 10.1007/S11042-010-0669-X

## Description

### TECHNICAL FIELD

The present disclosure relates to the field of computer technology, and more particularly, to a method and an apparatus for processing information.

### BACKGROUND

A screen capture application is commonly used by a user as a way of storing information. If the user wants to store content in a current display interface of a terminal, he may capture the current display interface by means of a shortcut and store it. Currently, the stored captured content will be displayed as a whole picture, but some independent elements in the captured content cannot be displayed separately. EP 2608167 discloses a gaming system compatible with patron-controlled mobile devices. EP2840488 discloses taking a screenshot and storing and transmitting to a second device additional information regarding the objects represented on the display, thus enabling the execution screen to be restored and executed.

### SUMMARY

Embodiments of the present disclosure provide a method and an apparatus for processing information. The technical solutions may be as follows.

According to a first aspect of embodiments of the present disclosure, there is provided a method for processing information, applied in a terminal as defined in claim 1 and including:
capturing a current display interface when detecting a capture operation instruction;
performing a content analysis on the captured display interface and determining whether the captured display interface contains contents with a preset format; and
adding an operation control corresponding to the content into the captured display interface and storing the captured display interface with the added operation control, if the captured display interface contains the content.

With the technical solution, the current display interface may be captured when the capture operation instruction for the current display interface is detected, the content analysis is performed on the captured current display interface, it is determined whether a content with the preset format exists in the captured current display interface, and the operation control corresponding to the content with the preset format is added into the captured current display interface and the captured current display interface is stored, if the content with the preset format exists in the captured current display interface. The operation control is added for the content with the preset format in the captured interface, so that the content with the preset format in the captured interface may be operated by the operation control when the user views the captured content subsequently.

Optionally, the content with the preset format includes a voice message, a video, a music, a text or a picture.

In this embodiment, the voice message, the video, the music, the text or the picture may be identified from the captured content, and the corresponding operation control may be added for them, so that the user may operate the voice message, the video, the music, the text or the picture in the captured content according to the corresponding operation control when viewing the captured content subsequently.

Adding an operation control corresponding to the content with the preset format into the captured current display interface includes:
obtaining a source of the content
generating a link address corresponding to the content according to the source; and
displaying the link address as the operation control at a preset location of the captured display interface.

The method further includes: displaying the content with the preset format to a user when receiving a trigger operation of the user for the operation control.

Displaying the content with the preset format to a user when receiving a trigger operation of the user for the operation control includes:
obtaining a link address corresponding to the operation control when receiving the trigger operation of the user for the operation control; and
obtaining the content with the preset format from the link address and displaying the obtained content.

In this technical solution, the source of the content with the preset format in the captured content may be looked up, and the link address may be generated for the content with the preset format according to the source, and the link address may be displayed in the form of the operation control in the captured content, so that the content with the preset format in the captured interface may be controlled to be displayed again when the user views the captured contcnt.

According to a second aspect of embodiments of the present disclosure, there is provided an apparatus for processing information, applied in a terminal as defined in claim 3 and including:
a screen capture processing module, configured to capture a current display interface when detecting a capture operation instruction;
a content analysis module, configured to perform a content analysis on the captured display interface and to determine whether the captured display interface contains contents with a preset format; and
an information processing module, configured to add an operation control corresponding to the content into the captured display interface and to store the captured display interface with the added operation control, if the captured display interface contains the content.

With the technical solution, the current display interface may be captured when the capture operation instruction for the current display interface is detected, the content analysis is performed on the captured current display interface, it is determined whether a content with the preset format exists in the captured current display interface, and the operation control corresponding to the content with the preset format is added into the captured current display interface and the captured current display interface is stored, if the content with the preset format exists in the captured current display interface. The operation control is added for the content with the preset format in the captured interface, so that the content with the preset format in the captured interface may be operated by the operation control when the user views the captured content subsequently.

Optionally, the content with the preset format includes a voice message, a video, a music, a text or a picture.

In this embodiment, the voice message, the video, the music, the text or the picture may be identified from the captured content, and the corresponding operation control may be added for them, so that the user may operate the voice message, the video, the music, the text or the picture in the captured content according to the corresponding operation control when viewing the captured content subsequently.

The information processing module includes:
an information obtaining sub-module, configured to obtain a source of the content with the preset format;
an information generating sub-module, configured to generate a link address corresponding to the content with the preset format according to the resource; and
an information displaying sub-module, configured to display the link address as the operation control at a preset location of the captured display interface.

The apparatus includes:
an information displaying module, configured to display the content with the preset format to a user when receiving a trigger operation of the user for the operation control.

The information displaying module is configured to obtain a link address corresponding to the operation control when receiving the trigger operation of the user for the operation control, and to obtain the content with the preset format from the link address and to display the contained content.

In this technical solution, the source of the content with the preset format in the captured content may be looked up, and the link address may be generated for the content with the preset format according to the source, and the link address may be displayed in the form of the operation control in the captured content, so that the content with the preset format in the captured interface may be controlled to be displayed again when the user views the captured content.

According to a third aspect of embodiments of the present disclosure, there is provided a device for processing information, as defined in claim 5, including:
a processor;
a memory configured to store an instruction executable by the processor;
in which the processor is configured to:
   capture a current display interface when detecting a capture operation instruction;
   perform a content analysis on the captured display interface and determine whether the captured display interface contains contents with a preset format; and
   add an operation control corresponding to the content into the captured display interface and store the captured current display interface with the added operation control, if the captured display interface contains the contents.

According to a fourth aspect of embodiments of the present disclosure, there is provided a non-transitory computer-readable storage medium having stored therein instructions that, when executed by a processor of a dcvicc, causes the device to perform a method for processing information, as defined in claim 6, the method including:
capturing a current display interface when detecting a capture operation instruction;
performing a content analysis on the captured display interface and determining whether the captured display interface contains contents with a preset format; and
adding an operation control corresponding to the content into the captured display interface and storing the captured display interface with the added operation control,, if the captured display interface contains the content.

The technical solutions provided by embodiments of the present disclosure may have following advantageous effects.

With the technical solution, the current display interface may be captured when the capture operation instruction for the current display interface is detected, the content analysis is performed on the captured current display interface, it is determine whether content with the preset format exists in the captured current display interface, and the operation control corresponding to the content with the preset format is added into the captured current display interface and the captured current display interface is stored, if the content with the preset format exists in the captured current display interface. The operation control is added for the content with the preset format in the captured interface, so that the content with the preset format in the captured interface may be operated by the operation control when the user views the captured content subsequently.

It is to be understood that both the foregoing general description and the following detailed description are exemplary and explanatory only and are not restrictive of the present disclosure. The invention is defined by the features of the independent claims. Further embodiments are the subject-matter of the dependent claims.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart showing a method for processing information according to an exemplary embodiment;
Fig. 2 is a flow chart showing a method for processing information according to another exemplary embodiment;
Fig. 3 is a block diagram showing an apparatus for processing information according to an exemplary embodiment;
Fig. 4 is a block diagram showing an apparatus for processing information according to another exemplary embodiment;
Fig. 5 is a block diagram showing an information processing module shown in the exemplary embodiment of Fig. 4;
Fig. 6 is a block diagram showing a device for displaying content according to an exemplary embodiment.

According to the above-described accompanying drawings, embodiments of the present disclosure are provided, and will be described in more detail hereafter. These accompanying drawings and corresponding description are not intended to limit the scope of the disclosure by any means, and the concept of the present disclosure is explained to those skilled in the art with reference to specific embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

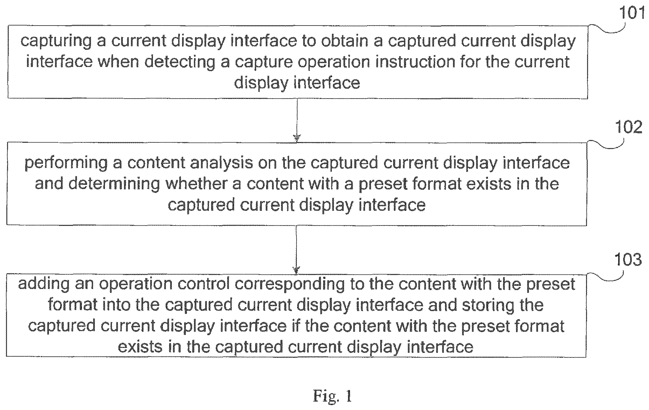

Fig. 1 is a flow chart showing a method for processing information according to an exemplary embodiment. This embodiment will be described taking an example of applying this method for processing information in a terminal such as a mobile phone, a panel computer, a smart television and the like. Referring to Fig. 1, the method for processing information may include the following steps.

In step 101, a current display interface is captured to obtain a captured display interface when detecting a capture operation instruction.

In step 102, a content analysis is performed on the captured display interface and it is determined whether the captured display interface contains contents with a preset format.

In step 103, an operation control corresponding to the content with the preset format is added into the captured display interface and the captured display interface with the added operation control is stored, if the captured display interface contains the content.

In conclusion, with the technical solution, the current display interface may be captured when the capture operation instruction for the current display interface is detected, the content analysis is performed on the captured current display interface, it is determined whether a content with the preset format exists in the captured current display interface, and the operation control corresponding to the content with the preset format is added into the captured current display interface and the captured current display interface is stored, if the content with the preset format exists in the captured current display interface. The operation control is added for the content with the preset format in the captured interface, so that the content with the preset format in the captured interface may be operated by the operation control when the user views the captured content subsequently.

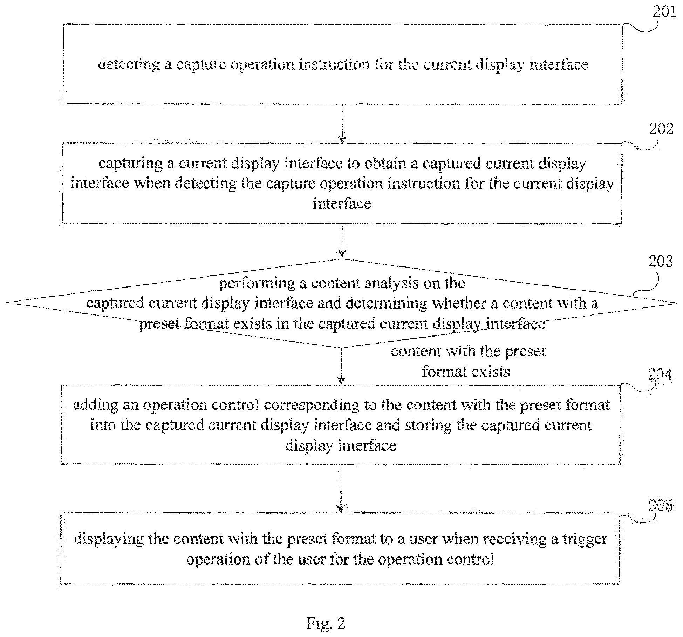

Fig. 2 is a flow chart showing a method for processing information according to another exemplary embodiment. This embodiment will be described taking an example of applying this method for processing information in a terminal such as a mobile phone, a panel computer, a smart television and the like. Referring to Fig. 2, the method for processing information may include the following steps.

In step 201, a capture operation instruction is detected for a current display interface of the terminal.

In step 202, a current display interface is captured to obtain a captured current display interface when the capture operation instruction for a current display interface is detected.

In step 203, a content analysis is performed on the captured current display interface and it is determined whether a content with a preset format exists in the captured current display interface.

In this technical solution, the content with the preset format includes a voice message, a video, a music, a text or a picture.

Then, the content analysis is performed on the captured display interface and the content may be read line by line, so as to determine whether the voice message, the video, the music, the text or the picture exists on the currently captured display interface.

Step 204 is executed if the content with the preset format exists in the captured current display interface.

The captured display interface is stored if the content with the preset format does not exist in the captured current display interface.

In step 204, an operation control corresponding to the content with the preset format is added into the captured current display interface and the captured current display interface is stored.

In this technical solution, adding the operation control corresponding to the content with the preset format into the captured current display interface includes the following steps.

A source of the content with the preset format is obtained.

In this technical solution, the source of the content with the preset format may be obtained by searching for a keyword of the content with the preset format locally or via a network server.

A link address corresponding to the content with the preset format is generated according to the resource.

In this embodiment of the present disclosure, if the source of the content with the preset format is local, a character string may be generated according to a preset random number generation algorithm, the generated character string may be used as the link address, and the content with the preset format and the link address are stored correspondingly. If the source of the content with the preset format is obtained from the network, the network address of the content may be used as the link address directly, and may be stored in corresponding to the link address.

The link address is displayed in a form of the operation control in a preset location of the captured current display interface.

In this technical solution, the operation control corresponding to the content with the preset format is added into the captured display interface, also the source of the content with the preset format is used to name the operation control and then to be displayed on the captured display interface, for example, if the content with the preset format comes from an application, the name of the application may be used to name the operation control; or the name of the content with the preset format is used to name the operation control and then to be displayed on the captured display interface, for example, if the content with the preset format is music, the name of the music is used to name the operation control.

In this embodiment, the voice message, the video, the music, the text or the picture is identified from the captured content, and the corresponding operation control may be added for them, so that the user may operate the voice message, the video, the music, the text or the picture in the captured content according to the corresponding operation control when viewing the captured content subsequently.

In step 205, the content with the preset format is displayed to the user when receiving a trigger operation of the user for the operation control.

In this technical solution, a link address corresponding to the operation control is obtained when the trigger operation of the user for the operation control is received; and the content with the preset format is obtained from the link address and is displayed to the user.

In this technical solution, the source of the content with the preset format in the captured content may be looked up, and the link address may be generated for the content with the preset format according to the source, and the link address may be displayed in the form of the operation control in the captured content, so that the content with the preset format in the captured interface may be controlled to be displayed again when the user views the captured content.

In conclusion, with this technical solution, the current display interface may be captured when the capture operation instruction for the current display interface is detected, the content analysis is performed on the captured current display interface, it is determined whether a content with the preset format exists in the captured current display interface, and the operation control corresponding to the content with the preset format is added into the captured current display interface and the captured current display interface is stored, if the content with the preset format exists in the captured current display interface. The operation control is added for the content with the preset format in the captured interface, so that the content with the preset format in the captured interface may be operated by the operation control when the user views the captured content subsequently.

In the following, the realization of the above technical solutions will be described in detail in combination with specific scenarios.

Scenario one: the technical solution is used in the scenario of capturing a messaging conversation display interface by the user. If the content analysis is performed on the captured current display interface, it is determined that the captured display interface contains a voice conversation message. Then the technical solution is used to generate a link address pointing to the voice conversation message for the voice conversation message stored locally, and to display the link address in the captured current display interface in the form of the operation control, and then to store the captured display interface. Then, if the user views the captured display interface, and finds that the interface contains the voice conversation and wants to re-listen to the content of the voice conversation, he may touch this operation control, and the terminal device may call the corresponding voice conversation message stored locally for playing according to the link address associated with the operation control.

Scenario two: the technical solution is used in the scenario of capturing a video playing interface by the user. If the content analysis is performed on the captured current display interface, it is obtained that the captured display interface is a frame of the video. Then the technical solution is used to identify the video information, to search for the video information from the local device or the network, to obtain a link address of the video information, to display the link address in the captured current display interface in the form of the operation control, and then to store the captured display interface. Then, if the user views the captured display interface, and finds that the interface is the frame of the video and wants to watch the video, he may touch this operation control, and the terminal device may call the corresponding video from the local or the network for playing according to the link address associated with the operation control.

Scenario three: the technical solution is used in the scenario of capturing a music playing interface by the user. If the content analysis is performed on the captured current display interface, it is obtained that the captured display interface is a music playing interface. Then the technical solution is used to identify the music information, and to search for the music information from the local device or the network, to obtain a link address of the music information, to display the link address in the captured current display interface in the form of the operation control, and then to store the captured display interface. Then, if the user views the captured display interface, and finds that the interface displays the music and wants to listen to the music, he may touch this operation control, and the terminal device may call the corresponding music from the local device or the network for playing according to the link address associated with the operation control.

Scenario four: the technical solution is used in the scenario of capturing a text display interface by the user. If the content analysis is performed on the captured current display interface, it is obtained that the captured display interface is a text display interface. Then the technical solution is used to search for a link address of the display text from the local device or the network, to display the link address in the captured current display interface in the form of the operation control, and then to store the captured display interface. Then, if the user views the captured display interface, and finds that the interface is the text and wants to edit the text, he may touch this operation control, and the terminal device may obtain the corresponding text from the local or the network and display according to the link address associated with the operation control.

The embodiments providing an apparatus of the present disclosure are as follows. The apparatus is used to implement the method according to the embodiments of the present disclosure. Concerning the details which are not described in the embodiments of the device, reference is made to the embodiments of the method.

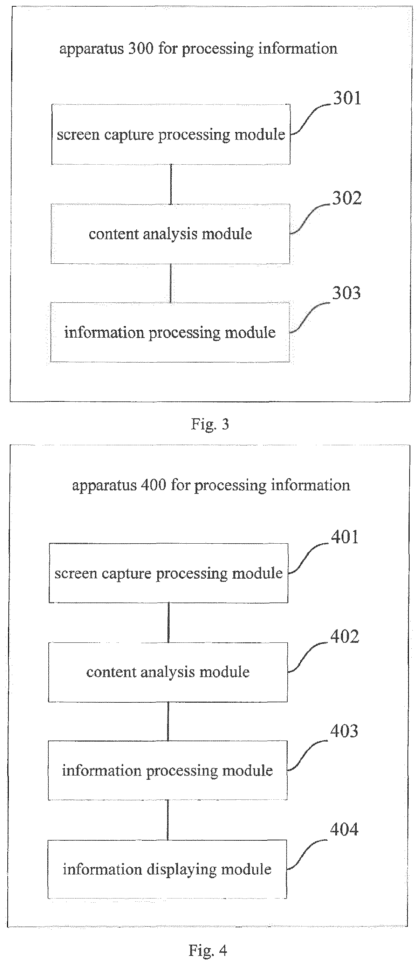

Fig. 3 is a block diagram showing an apparatus 300 for processing information according to an exemplary embodiment. The apparatus 300 for processing information may be all or a part of a terminal realized by software, hardware or combinations thereof, and the terminal may be a mobile phone, a panel computer, a smart television and the like. The apparatus 300 for processing information may include a screen capture processing module 301, a content analysis module 302 and an information processing module 303.

The screen capture processing module 301 is configured to capture a current display interface to obtain a captured current display interface when detecting a capture operation instruction for the current display interface.

The content analysis module 302 is configured to perform a content analysis on the captured current display interface and to determine whether a content with a preset format exists in the captured current display interface.

The information processing module 303 is configured to add an operation control corresponding to the content with the preset format into the captured current display interface and to store the captured current display interface if the content with the preset format exists in the captured current display interface.

With the technical solution, the current display interface may be captured when the capture operation instruction for the current display interface is detected, the content analysis is performed on the captured current display interface, it is determined whether a content with the preset format exists in the captured current display interface, and the operation control corresponding to the content with the preset format is added into the captured current display interface and the captured current display interface is stored, if the content with the preset format exists in the captured current display interface. The operation control is added for the content with the preset format in the captured interface, so that the content with the preset format in the captured interface may be operated by the operation control when the user views the captured content subsequently.

Fig. 4 is a block diagram showing an apparatus 400 for processing information according to another exemplary embodiment. The apparatus 400 for processing information may be all or a part of a terminal realized by software, hardware or combinations thereof, and the terminal may be a mobile phone, a panel computer, a smart television and the like. The apparatus 400 for processing information may include a screen capture processing module 401, a content analysis module 402, an information processing module 403 and an information displaying module 404.

The screen capture processing module 401 is configured to capture a current display interface to obtain a captured current display interface when detecting a capture operation instruction for the current display interface.

The content analysis module 402 is configured to perform a content analysis on the captured current display interface and to determine whether a content with a preset format exists in the captured current display interface.

The information processing module 403 is configured to add an operation control corresponding to the content with the preset format into the captured current display interface and to store the captured current display interface if the content with the preset format exists in the captured current display interface.

The information displaying module 404 is configured to display the content with the preset format to a user when receiving a trigger operation of the user for the operation control.

The content with the preset format includes a voice message, a video, music, a text or a picture.

In this embodiment, the voice message, the video, the music, the text or the picture may be identified from the captured content, and the corresponding operation control may be added for them, so that the user may operate the voice message, the video, the music, the text or the picture in the captured content according to the corresponding operation control when viewing the captured content subsequently.

The information displaying module 404 is configured to obtain a link address corresponding to the operation control when receiving the trigger operation of the user for the operation control, and to obtain the content with the preset format from the link address and to display it to the user.

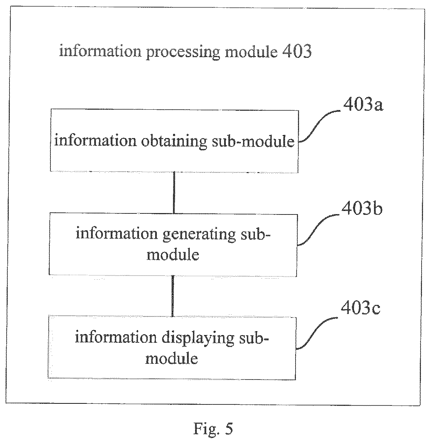

Optionally, referring to Fig. 5, the information processing module 403 may include an information obtaining sub-module 403a, an information generating sub-module 403b and an information displaying sub-module 403c.

The information obtaining sub-module 403a is configured to obtain a source of the content with the preset format.

The information generating sub-module 403b is configured to generate a link address corresponding to the content with the preset format according to the resource.

The information displaying sub-module 403c is configured to display the link address in a form of the operation control in a preset location of the captured current display interface.

In this technical solution, the source of the content with the preset format in the captured content may be looked up, and the link address may be generated for the content with the preset format according to the source, and the link address may be displayed in the form of the operation control in the captured content, so that the content with the preset format in the captured interface may be controlled to be displayed again when the user views the captured content.

In conclusion, with this technical solution, the current display interface may be captured when the capture operation instruction for the current display interface is detected, the content analysis is performed on the captured current display interface, it is determined whether a content with the preset format exists in the captured current display interface, and the operation control corresponding to the content with the preset format is added into the captured current display interface and the captured current display interface is stored, if the content with the preset format exists in the captured current display interface. The operation control is added for the content with the preset format in the captured interface, so that the content with the preset format in the captured interface may be operated by the operation control when the user views the captured content subsequently.

With respect to the device in the above embodiments, the specific manners for performing operations for individual modules therein have been described in detail in the embodiments regarding the methods, which are not elaborated herein again.

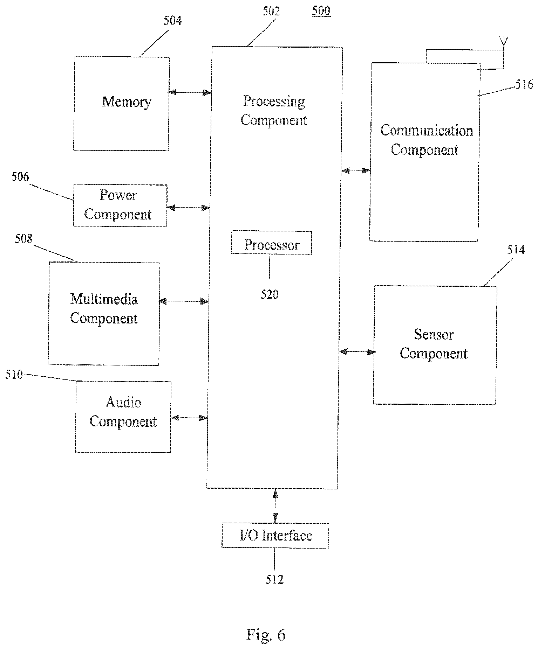

Fig. 6 is a block diagram showing a device 500 for processing information according to an exemplary embodiment. For example, the device 500 may be a mobile phone, a panel computer, or a smart television, and the like.

Referring to Fig. 6, the device 500 may include one or more of the following components: a processing component 502, a memory 504, a power component 506, a multimedia component 508, an audio component 510, an input/output (I/O) interface 512, a sensor component 514 and a communication component 516.

The processing component 502 typically controls overall operations of the device 500, such as the operations associated with display, telephone calls, data communications, camera operations, and recording operations. The processing component 502 may include one or more processors 520 to execute instructions so as to perform all or a part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the device 500. Examples of such data include instructions for any applications or methods operated on the device 500, contact data, phonebook data, messages, pictures, videos, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 is configured to provide power to various components of the device 500. The power component 506 may include a power management system, one or more power sources, and other components associated with the generation, control, and distribution of power in the device 500.

The multimedia component 508 includes a screen configured to provide an output interface between the device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum when the device 500 is in an operation mode such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the device 500 is in an operation mode, such as a call mode, a recording mode, and a voice recognition mode. The received audio signal may be further stored in the memory 504 or transmitted via the communication component 516. In some embodiments, the audio component 510 further includes a loud speaker to output audio signals.

The I/O interface 512 is configured to provide an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the device 500. For instance, the sensor component 514 may detect an on/off status of the device 500, relative positioning of components (e.g., a display screen and a keypad) of the device 500. The sensor component 514 may further detect a change in position of the device 500 or a component of the device 500, a presence or absence of user contact with the device 500, an orientation or an acceleration/deceleration of the device 500, and a change in temperature of the device 500. The sensor component 514 may include a proximity sensor configured to detect the presence of nearby objects without any physical contact. The sensor component 514 may further include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate a wired or wireless communication between the device 500 and other terminals. The device 500 can access a wireless network based on a communication standard, such as WiFi, 2G, or 3G, or a combination thereof. In one exemplary embodiment, the communication component 516 receives a broadcast signal or broadcast associated information from an external broadcast control system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, or other technologies.

In exemplary embodiments, the device 500 may be implemented with one or more electronic elements such as application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is further provided a non-transitory computer readable storage medium including instructions, such as the memory 504 including instructions executable by the processor 520 in the device 500 to perform the above-described methods. For example, the non-transitory computer-readable storage medium may be a ROM, a RAM, a CD-ROM, a magnetic tape, a floppy disc, an optical data storage device, and the like.

A non-transitory computer-readable storage medium has instructions stored therein. When executed by a processor of the device 500, the instruction causes the device 500 to perform the above method for processing information.

## Claims

1. A method for processing information, applied in a terminal and comprising:
capturing a current display interface when detecting a capture operation instruction (101; 202);
performing a content analysis on the captured display interface, reading the content by line, and determining whether the captured display interface contains content with a preset format (102; 203); wherein the method is **characterized by**
if the captured display interface contains the content, obtaining a resource of the content by searching for a keyword of the content locally or via a network server;
generating a link address corresponding to the content according to the resource;
displaying the link address as an operation control corresponding to the content at a preset location of the captured display interface;
when receiving a trigger operation of a user for the operation control, obtaining the link address corresponding to the operation control; and
obtaining the content from the link address and displaying the obtained content.

2. The method according to claim 1, wherein the content with the preset format comprises a voice message, a video, a music, a text or a picture.

3. An apparatus (300; 400) for processing information, applied in a terminal, and comprising:
a screen capture processing module (301; 401), configured to capture a current display interface when detecting a capture operation instruction;
a content analysis module (302; 402), configured to perform a content analysis on the captured display interface, to read the content by line, and to determine whether the captured display interface contains content with a preset format; wherein the apparatus is **characterized by** comprising an information processing module (303; 403), configured to add an operation control corresponding to the content into the captured display interface and to store the captured display interface with the added operation control, if the captured display interface contains the content, wherein the information processing module (303; 403) comprises: an information obtaining sub-module (403a), configured to obtain a resource of the content by searching for a keyword of the content locally or via a network server; an information generating sub-module (403b), configured to generate a link address corresponding to the content with the preset format according to the resource; and an information displaying sub-module (403c), configured to display the link address as the operation control at a preset location of the captured display interface; and
an information displaying module (404), configured to obtain the link address corresponding to the operation control when receiving a trigger operation of a user for the operation control, and to obtain the content from the link address and to display the obtained content.

4. The apparatus according to claim 3, wherein the content with the preset format comprises a voice message, a video, a music, a text or a picture.

5. A device for processing information, comprising:
a processor;
a memory configured to store an instruction executable by the processor;
wherein the processor is configured to perform the method for processing information according to any one of claims 1 to 2.

6. A non-transitory computer-readable storage medium having stored therein instructions that, when executed by a processor of a device, cause the device to perform the method for processing information according to any one of claims 1 to 2.

## Patentansprüche

1. Verfahren zur Verarbeitung von Informationen, das in einem Endgerät angewendet wird, und Folgendes umfasst:
Erfassen einer aktuellen Anzeigeschnittstelle bei Detektion einer Erfassungsvorgangsanweisung (101; 202);
Durchführen einer Inhaltsanalyse an der erfassten Anzeigeschnittstelle, zeilenweise Lesen des Inhalts, und Bestimmen, ob die erfasste Anzeigeschnittstelle Inhalt mit einem voreingestellten Format (102; 203) enthält; wobei das Verfahren **gekennzeichnet ist, durch**
falls die erfasste Anzeigeschnittstelle den Inhalt enthält, Erhalten einer Ressource des Inhalts **durch** Suchen nach einem Stichwort des Inhalts lokal oder über einen Netzwerkserver;
Erzeugen einer Verknüpfungsadresse entsprechend dem Inhalt gemäß der Ressource;
Anzeigen der Verknüpfungsadresse als Vorgangssteuerung entsprechend dem Inhalt an einer voreingestellten Stelle der erfassten Anzeigeschnittstelle;
bei Empfang eines Auslöservorgangs eines Nutzers für die Vorgangssteuerung, Erhalten der Verknüpfungsadresse entsprechend der Vorgangssteuerung; und
Erhalten des Inhalts von der Verknüpfungsadresse und Anzeigen des erhaltenen Inhalts.

2. Verfahren nach Anspruch 1, wobei der Inhalt mit dem voreingestellten Format eine Sprachnachricht, ein Video, Musik, Text oder ein Bild umfasst.

3. Einrichtung (300; 400) zur Verarbeitung von Informationen, mit Anwendung in einem Endgerät, und Folgendes umfassend:
ein Bildschirmerfassungsverarbeitungsmodul (301; 401), das konfiguriert ist, um bei Detektion einer Erfassungsvorgangsanweisung eine aktuelle Anzeigeschnittstelle zu erfassen;
ein Inhaltsanalysemodul (302; 402), das konfiguriert ist, um an der erfassten Anzeigeschnittstelle eine Inhaltsanalyse durchzuführen, um den Inhalt zeilenweise zu lesen, und um zu bestimmen, ob die erfasste Anzeigeschnittstelle Inhalt mit einem voreingestellten Format enthält; wobei die Einrichtung **dadurch gekennzeichnet ist, dass** sie Folgendes umfasst
ein Informationsverarbeitungsmodul (303; 403), das konfiguriert ist, um eine Vorgangssteuerung entsprechend dem Inhalt in der erfassten Anzeigeschnittstelle hinzuzufügen, und die erfasste Anzeigeschnittstelle mit der hinzugefügten Vorgangssteuerung zu speichern, falls die erfasste Anzeigeschnittstelle den Inhalt enthält, wobei das Informationsverarbeitungsmodul (303; 403) Folgendes umfasst: ein Informationserhaltungsteilmodul (403a), das konfiguriert ist, um eine Ressource des Inhalts durch Suchen nach einem Stichwort des Inhalts, lokal oder über einen Netzwerkserver, zu erhalten; ein Informationserzeugungsteilmodul (403b), das konfiguriert ist, um eine Verknüpfungsadresse entsprechend dem Inhalt mit dem voreingestellten Format gemäß der Ressource zu erzeugen; und ein Informationsanzeigeteilmodul (403c), das konfiguriert ist, um die Verknüpfungsadresse als die Vorgangssteuerung an einer voreingestellten Stelle der erfassten Anzeigeschnittstelle anzuzeigen; und
ein Informationsanzeigemodul (404), das konfiguriert ist, um bei Empfang eines Auslöservorgangs eines Nutzers für die Vorgangssteuerung die Verknüpfungsadresse entsprechend der Vorgangssteuerung zu erhalten, und den Inhalt von der Verknüpfungsadresse zu erhalten, und den erhaltenen Inhalt anzuzeigen.

4. Einrichtung nach Anspruch 3, wobei der Inhalt mit dem voreingestellten Format eine Sprachnachricht, ein Video, Musik, Text oder ein Bild umfasst.

5. Vorrichtung zur Verarbeitung von Informationen, umfassend:
einen Prozessor;
einen Speicher, der konfiguriert ist, um eine durch den Prozessor ausführbare Anweisung zu speichern;
wobei der Prozessor konfoguriert ist, um das Verfahren zur Verarbeitung von Informationen nach einem der Ansprüche 1 bis 2 auszuführen.

6. Nicht flüchtiges, computerlesbares Speichermedium, das darin gespeicherte Anweisungen aufweist, die, wenn sie von einem Prozessor einer Vorrichtung ausgeführt werden, bewirken, dass die Vorrichtung das Verfahren zur Verarbeitung von Informationen nach einem der Ansprüche 1 bis 2 ausführt.

## Revendications

1. Procédé permettant de traiter des informations, appliqué dans un terminal et comprenant :
une capture d'une interface d'afficheur courante lors de la détection d'une instruction d'opération de capture (101 ; 202) ;
une mise en œuvre d'une analyse de contenu sur l'interface d'afficheur capturée, une lecture du contenu par ligne, et le fait de déterminer si l'interface d'afficheur capturée contient un contenu avec un format prédéfini (102 ; 203) ; dans lequel le procédé est **caractérisé par**
si l'interface d'afficheur capturée contient le contenu, une obtention d'une ressource du contenu en recherchant un mot-clé du contenu localement ou via un serveur de réseau ;
une génération d'une adresse de liaison correspondant au contenu conformément à la ressource ;
un affichage de l'adresse de liaison en tant qu'une commande d'opération correspondant au contenu à un emplacement prédéfini de l'interface d'afficheur capturée ;
lors de la réception d'une opération de déclenchement d'un utilisateur pour la commande d'opération, une obtention de l'adresse de liaison correspondant à la commande d'opération ; et
une obtention du contenu à partir de l'adresse de liaison et un affichage du contenu obtenu.

2. Procédé selon la revendication 1, dans lequel le contenu avec le format prédéfini comprend un message vocal, une vidéo, une musique, un texte ou une image.

3. Appareil (300; 400) permettant de traiter des informations, appliqué dans un terminal, et comprenant :
un module de traitement de capture d'écran (301 ; 401), configuré pour capturer une interface d'afficheur courante lors de la détection d'une instruction d'opération de capture ;
un module d'analyse de contenu (302 ; 402), configuré pour mettre en œuvre une analyse de contenu sur l'interface d'afficheur capturée, pour lire le contenu par ligne, et pour déterminer si l'interface d'afficheur capturée contient un contenu avec un format prédéfini ; dans lequel l'appareil est **caractérisé en ce qu'**il comprend
un module de traitement d'informations (303 ; 403), configuré pour ajouter une commande d'opération correspondant au contenu dans l'interface d'afficheur capturée et pour stocker l'interface d'afficheur capturée avec la commande d'opération ajoutée, si l'interface d'afficheur capturée contient le contenu, dans lequel le module de traitement d'informations (303; 403) comprend : un sous-module d'obtention d'informations (403a), configuré pour obtenir une ressource du contenu en recherchant un mot-clé du contenu localement ou via un serveur de réseau ; un sous-module de génération d'informations (403b), configuré pour générer une adresse de liaison correspondant au contenu avec le format prédéfini conformément à la ressource ; et un sous-module d'affichage d'informations (403c), configuré pour afficher l'adresse de liaison en tant que la commande d'opération à un emplacement prédéfini de l'interface d'afficheur capturée ; et
un module d'affichage d'informations (404), configuré pour obtenir l'adresse de liaison correspondant à la commande d'opération lors de la réception d'une opération de déclenchement d'un utilisateur pour la commande d'opération, et pour obtenir le contenu à partir de l'adresse de liaison et pour afficher le contenu obtenu.

4. Appareil selon la revendication 3, dans lequel le contenu avec le format prédéfini comprend un message vocal, une vidéo, une musique, un texte ou une image.

5. Dispositif permettant de traiter des informations, comprenant :
un processeur;
une mémoire configurée pour stocker une instruction exécutable par le processeur;
dans lequel le processeur est configuré pour mettre en œuvre le procédé permettant de traiter des informations selon l'une quelconque des revendications 1 à 2.

6. Support de stockage non transitoire lisible par ordinateur présentant stockées dans celui-ci des instructions qui, lorsqu'elles sont exécutées par un processeur d'un dispositif, amènent le dispositif à mettre en œuvre le procédé permettant de traiter des informations selon l'une quelconque des revendications 1 à 2.
